# EUROPEAN PATENT APPLICATION

(11) **EP 4 693 615 A2**
(43) Date of publication of application: **11.02.2026**
(21) Application number: 25190187.2
(22) Date of filing: 17.07.2025
(51) Int. Cl.: H01M 10/615, H01M 10/637

(54) **SECONDARY BATTERY**

(30) Priority: 01.08.2024 KR 20240102620
(71) Applicant: SK On Co., Ltd., Seoul 03161 (KR)
(72) Inventor: LEE, Seung Min, 34124 Daejeon (KR)
(74) Representative: Prüfer & Partner mbB Patentanwälte · Rechtsanwälte

(57) **Abstract**

A secondary battery according to embodiments of the present invention includes an electrode assembly including cathodes and anodes repeatedly stacked, a case configured to accommodate the electrode assembly, and a positive temperature coefficient (PTC) heating sheet disposed between the case and the outermost surface of the electrode assembly.

## Description

### BACKGROUND

### 1. Field of the Invention

The present disclosure relates to a secondary battery, and more specifically, to a secondary battery which includes an electrode assembly and additional elements coupled to the electrode assembly.

### 2. Description of the Related Art

A secondary battery is a battery that can be repeatedly charged and discharged. With the rapid progress of information and communication technology and display industries, the secondary battery has been widely applied to various portable electronic telecommunication devices such as a camcorder, a mobile phone, a laptop computer, etc. as their power sources. Recently, a battery pack including the secondary battery has also been developed and applied to eco-friendly automobiles such as an electric vehicle, a hybrid vehicle, etc., as their power sources.

Examples of the secondary battery may include a lithium secondary battery, a nickelcadmium battery, a nickel-hydrogen battery and the like. Among them, the lithium secondary battery has a high operating voltage and a high energy density per unit weight, making it advantageous in terms of charging speed and lightweight design. In this regard, the lithium secondary battery has been actively developed and applied to various industrial fields.

For example, the lithium secondary battery may include: an electrode assembly including a cathode, an anode, and a separator (separator); and an electrolyte in which the electrode assembly is impregnated. The lithium secondary battery may further include, for example, a pouch-type outer case in which the electrode assembly and the electrolyte are accommodated.

When charging/discharging the lithium secondary battery under harsh environments such as high or low temperatures, for example, the capacity and output properties may deteriorate due to an increase in resistance, or the stability of the battery may be reduced.

### SUMMARY

An object of the present disclosure is to provide a secondary battery having improved operation stability and output properties.

A secondary battery according to exemplary embodiments of the present disclosure includes: an electrode assembly which includes cathodes and anodes repeatedly stacked; a case configured to accommodate the electrode assembly, and a positive temperature coefficient (PTC) heating sheet disposed between the case and the outermost surface of the electrode assembly.

According to exemplary embodiments, the cathode may include a cathode current collector including cathode tabs, and the anode may include an anode current collector including anode tabs, wherein the electrode assembly may include a cathode tab merging part in which the cathode tabs are merged, and an anode tab merging part in which the anode tabs are merged.

According to exemplary embodiments, the PTC heating sheet may include a heating tab electrically connected to the cathode tab merging part or the anode tab merging part.

According to exemplary embodiments, the heating tab may include a first heating tab connected to the cathode tab merging part, and a second heating tab connected to the anode tab merging part.

According to exemplary embodiments, the electrode assembly may further include a separator disposed between the cathode and the anode, and the outermost surface of the electrode assembly may be formed by the separator.

According to exemplary embodiments, the PTC heating sheet may include a substrate and a PTC element layer formed on the substrate and including a PTC material.

According to exemplary embodiments, the PTC element layer may include a plurality of PTC elements, and a distribution density of the PTC elements in a central portion of the PTC heating sheet may be greater than a distribution density of the PTC elements in a peripheral portion of the PTC heating sheet.

According to exemplary embodiments, the cathode and the anode may each include a cathode tab and an anode tab, and the peripheral portion of the PTC heating sheet may be closer to the cathode tab or the anode tab than the central portion of the PTC heating sheet.

According to exemplary embodiments, the distribution density of the PTC elements may gradually increase in a direction from the peripheral portion of the PTC heating sheet to the central portion of the PTC heating sheet.

According to exemplary embodiments, the PTC heating sheet may include a transition portion between the peripheral portion and the central portion, and a distribution density of the PTC elements in the transition portion may be greater than in the peripheral portion and smaller than in the central portion.

According to exemplary embodiments, the substrate may include a printed circuit board including a core layer including an insulating material, and a circuit layer, and the PTC elements may be electrically connected to the circuit layer.

According to exemplary embodiments, the PTC heating sheet may further include a switch connected to the circuit layer and configured to control the operation of the PTC elements.

According to exemplary embodiments, the PTC heating sheet may further include a protective layer formed on the substrate and covering the PTC element layer.

According to exemplary embodiments, a ratio of an area of the PTC heating sheet to an area of the outermost surface of the electrode assembly may be 70% or more.

According to exemplary embodiments, the PTC heating sheet may include a first PTC heating sheet arranged on an uppermost surface of the electrode assembly and a second PTC heating sheet arranged on a lowermost surface of the electrode assembly.

The secondary battery according to exemplary embodiments of the present disclosure may include a PTC heating sheet disposed on the outermost surface of the electrode assembly, thereby exhibiting improved capacity properties and output properties at low temperatures.

According to exemplary embodiments of the present disclosure, the PTC heating sheet may include PTC elements. For example, the distribution density of the PTC elements in the central portion of the PTC heating sheet may be greater than the distribution density of the PTC elements in the peripheral portion of the PTC heating sheet. Accordingly, the performance deviation due to the heating deviation according to the position of the electrode assembly may be reduced.

The secondary battery according to exemplary embodiments of the present disclosure may be widely applied in green technology fields, such as electric vehicles, battery charging stations, as well as solar power generation, wind power generation, and the like, which use the batteries. In addition, the secondary battery according to exemplary embodiments of the present disclosure may be used used in eco-friendly electric vehicles, hybrid vehicles, and the like, which are aimed at mitigating climate change by reducing air pollution and greenhouse gas emission.

### BRIEF DESCRIPTION OF THE DRAWINGS

The above and other objects, features and other advantages of the present disclosure will be more clearly understood from the following detailed description taken in conjunction with the accompanying drawings, in which:
FIGS. 1 and 2 are schematic plan and cross-sectional views of a secondary battery according to exemplary embodiments, respectively;
FIG. 3 is a schematic cross-sectional view of the secondary battery according to exemplary embodiments;
FIGS. 4 and 5 are schematic cross-sectional views of a PTC heating sheet according to exemplary embodiments;
FIGS. 6 to 8 are schematic plan views of the PTC heating sheet according to exemplary embodiments; and
FIGS. 9 to 11 are graphs illustrating temperature changes over time of the PTC heating sheets according to Examples 1 and 2, and a Comparative Example, respectively.

### DETAILED DESCRIPTION OF THE EMBODIMENTS

Embodiments of the present disclosure provide a secondary battery which includes an electrode assembly including a cathode and an anode, a case, and a PTC heating sheet disposed between the electrode assembly and the case.

Hereinafter, the embodiments of the present disclosure will be described in detail with reference to the accompanying drawings. However, since the drawings attached to the present disclosure are only given for illustrating one of several preferred embodiments of the present invention to easily understand the technical spirit of the present invention with the above-described invention, it should not be construed as limited to such a description illustrated in the drawings.

As used herein, the terms "upper surface," "lower surface," "upper portion," "lower portion," "bottom surface," "bottom portion," and the like are used in a relative sense to distinguish the positions of components, and do not specify absolute positions.

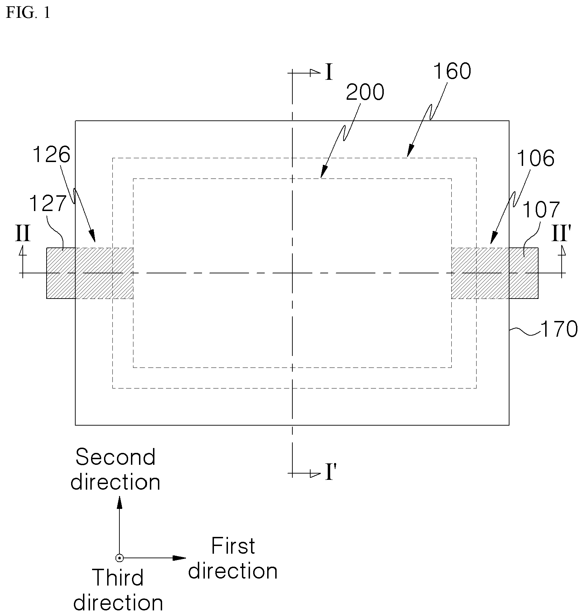

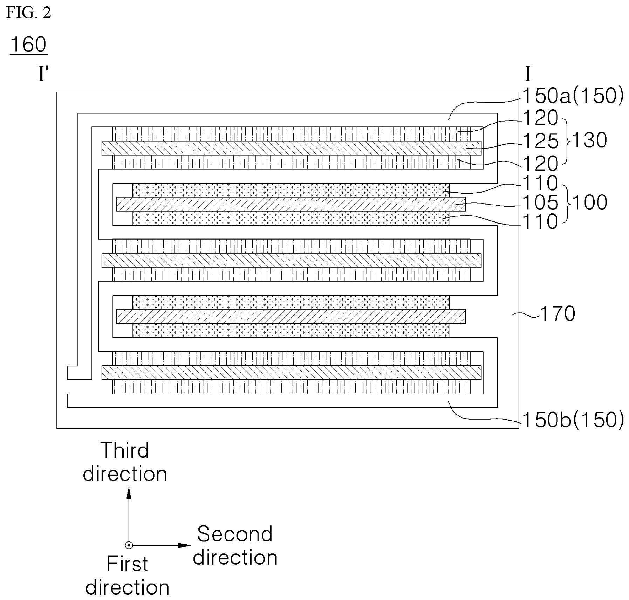

FIGS. 1 and 2 are schematic plan and cross-sectional views illustrating a secondary battery according to exemplary embodiments, respetively. FIG. 2 is a cross-sectional view of an electrode assembly taken along line I-I' of FIG. 1 in the thickness direction. In FIG. 2, a PTC heating sheet formed on the electrode assembly is not illustrated.

In FIG. 1, two directions parallel to the upper or lower surface of an electrode assembly 160 and intersecting each other are defined as a first direction and a second direction. For example, the first direction and the second direction may intersect each other perpendicularly. The direction perpendicular to the upper surface of the electrode assembly 160 is defined as a third direction. For example, the first direction may correspond to the longitudinal direction of the electrode assembly 160, the second direction may correspond to the width direction of the electrode assembly 160, and the third direction may correspond to the thickness direction of the electrode assembly 160. The definition of the directions may be consistently applied to the other drawings.

Referring to FIGS. 1 and 2, the secondary battery may include the electrode assembly 160 in which anodes 130 and cathodes 100 disposed opposite to the anode 130 are repeatedly stacked, and a positive temperature coefficient (PTC) heating sheet 200 disposed on the electrode assembly 160.

The cathode 100 may include a cathode current collector 105 and a cathode active material layer 110 formed on a surface of the cathode current collector 105.

The cathode current collector 105 may include, for example, stainless steel, nickel, aluminum, titanium, copper, or an alloy thereof, and preferably, includes aluminum or an aluminum alloy.

The cathode active material layer 110 may be formed on at least one of upper and lower surfaces of the cathode current collector 105. According to exemplary embodiments, the cathode active material layer 110 may be formed on both the upper and lower surfaces of the cathode current collector 105, respectively.

For example, a cathode slurry may be prepared by mixing a cathode active material with a cathode binder, a conductive material, and/or a dispersant in a solvent, followed by stirring. The cathode current collector 105 may be coated with the cathode slurry, then dried and compressed to prepare the cathode 100.

The cathode active material may include a compound capable of reversibly intercalating and deintercalating lithium ions.

In exemplary embodiments, the cathode active material may include a lithium-transition metal oxide. For example, the lithium-transition metal oxide may include nickel (Ni), and may further include at least one of cobalt (Co) and manganese (Mn).

For example, the lithium-transition metal oxide may be represented by Formula 1 below.

[Formula 1] Li₁₊ₐNi_{1-(x+y)}COₓM_{y}O₂

In the above Formula 1, a, x and y may satisfy -0.05≤a≤0.15, 0.01≤x≤0.3, 0.01≤y≤0.3, and M may be at least one element selected from Mn, Mg, Sr, Ba, B, Al, Si, Ti, Zr or W.

The cathode binder may include, for example, an organic binder such as vinylidene fluoride-hexafluoropropylene copolymer (PVDF-co-HFP), polyvinylidene fluoride (PVDF), polyacrylonitrile, polymethyl methacrylate, etc., or an aqueous binder such as styrene-butadiene rubber (SBR), and may be used together with a thickener such as carboxymethyl cellulose (CMC).

For example, a PVDF-based binder may be used as a binder for forming the cathode. In this case, the amount of the binder for forming the cathode active material layer 110 may be reduced and the amount of the cathode active material may be relatively increased. As a result, the output and capacity of a secondary battery device may be improved.

The conductive material may be included to facilitate electron migration between the active material particles. For example, the conductive material may include carbon-based conductive materials such as graphite, carbon black, graphene, or carbon nanotubes and/or metal-based conductive materials, including perovskite materials, such as tin, tin oxide, titanium oxide, LaSrCoO₃, and LaSrMnO₃, etc.

The anode 130 may include an anode current collector 125 and an anode active material layer 120 formed on a surface of the anode current collector 125. The anode active material layer 120 may be formed on at least one of upper and lower surfaces of the anode current collector 125. According to exemplary embodiments, the anode active material layer 120 may be formed both on the upper and lower surfaces of the anode current collector 125, respectively.

The anode current collector 125 may include, for example, gold, stainless steel, nickel, aluminum, titanium, copper, or an alloy thereof, and preferably includes copper or a copper alloy.

For example, an anode slurry may be prepared by mixing an anode active material with an anode binder, a conductive material, and/or a dispersant in a solvent, followed by stirring. The anode current collector is coated with the anode slurry, then dried and compressed to prepare the anode.

The anode active material may include a silicon (Si)-based active material and/or a carbon-based active material.

Examples of the carbon-based active material include graphite, hard carbon, soft carbon, cokes, and the like. In some embodiments, a graphite-based material may be used as the carbon-based active material, and preferably, artificial graphite or a mixture of natural graphite and artificial graphite is used.

The silicon-based active material may include, for example, silicon oxide (SiO_{X}) (0<x<2) particles.

**In** some embodiments, the anode active material may also include a mixture of the silicon-based active material and the carbon-based active material, or a silicon-carbon-based active material. The silicon-carbon-based active material may include, for example, silicon carbide (SiC), or silicon-carbon particles having a core-shell structure. The silicon-carbon particles may be formed, for example, by depositing a silicon layer on a graphite core surface. **In** one embodiment, the silicon-carbon particles may be formed by coating a silicon layer onto commercially available graphite particles through a chemical vapor deposition (CVD) process using a silicon precursor compound such as a silane-based compound.

The anode binder, conductive material, and/or dispersant may be used without particular limitation and may include any material known in the art.

According to exemplary embodiments, the electrode assembly 160 may include a separator 150.

The separator 150 may include a porous polymer film made of a polyolefin polymer such as an ethylene homopolymer, propylene homopolymer, ethylene/butene copolymer, ethylene/hexene copolymer, ethylene/methacrylate copolymer. The separator 150 may include a nonwoven fabric made of glass fibers having a high melting point, polyethylene terephthalate fibers, etc.

**In** some embodiments, the anode 130 may have an area (e.g., a contact area with the separator) and/or volume larger than that of the cathode 100. As a result, lithium ions generated from the cathode may smoothly migrate to the anode without being precipitated during the migration process, for example.

According to exemplary embodiments, a plurality of unit cells, each defined by the cathode 100, the separator 150 and the anode 130, may be stacked. For example, the electrode assembly 160 may be formed by winding, laminating, or folding the separator 150.

As shown in FIG. 1, a laminate of the electrode assembly 160 and the PTC heating sheet 200 may be accommodated in a case 170.

The width of the PTC heating sheet 200 may be equal to or smaller than the width of the outermost surface of the electrode assembly 160. Accordingly, the electrode assembly 160 may be easily accommodated within the battery case.

According to exemplary embodiments, a ratio of an area of the PTC heating sheet 200 to an area of the outermost surface of the electrode assembly 160 may be 70% or more. For example, the ratio of the area of the PTC heating sheet 200 to the area of the outermost surface of the electrode assembly 160 may be 80% or more or 90% or more. Within the above range, the heating properties of the secondary battery provided by the PTC heating sheet 200 may be further improved.

For example, the laminate may be accommodated within the case 170 together with an electrolyte solution to form a single secondary battery cell. According to exemplary embodiments, a non-aqueous electrolyte solution may be used as the electrolyte solution.

The non-aqueous electrolyte solution may include a lithium salt as an electrolyte and an organic solvent, the lithium salt is represented by, for example, Li⁺X⁻, and as an anion (X⁻) of the lithium salt, F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻, etc. may be exemplified.

As the organic solvent, for example, propylene carbonate (PC), ethylene carbonate (EC), diethyl carbonate (DEC), dimethyl carbonate (DMC), ethyl methyl carbonate (EMC), methyl propyl carbonate, dipropyl carbonate, dimethyl sulfuroxide, acetonitrile, dimethoxyethane, diethoxyethane, vinylene carbonate, sulfolane, gamma-butyrolactone, propylene sulfite and tetrahydrofuran, etc. may be used. These may be used alone or in combination of two or more thereof.

The secondary battery may be manufactured, for example, in a cylindrical shape using a can, a prismatic shape, a pouch shape or a coin shape.

The electrode assembly 160 may include a cathode tab extending from the cathode current collector 105 and an anode tab extending from the anode current collector 125.

The cathode tab and the anode tab of the electrode assembly 160 may protrude and extend to one side of the case 170.

The cathode lead 107 may be electrically connected to the cathode tab and may be exposed to the outside of the case 170. The anode lead 127 may be electrically connected to the anode tab and may be exposed to the outside of the case 170. The electrode leads including the cathode lead 107 and the anode lead 127 may be provided as external connection leads for applying power to the secondary battery.

The cathode lead 107 and the anode lead 127 may be fused to together with the one side of the case 170 and extend outside of the case 170.

For example, the anode lead 127 may protrude from a first side of the case 170, and the cathode lead 107 may protrude from a second side of the case 170. There is no limitation on the protrusion direction of the cathode tab and the anode tab, and the cathode lead 107 and the anode lead 127 may protrude in a single direction or in both directions of the secondary battery.

In FIG. 1, the cathode lead 107 and the anode lead 127 are illustrated as protruding from both sides of the secondary battery in the planar direction, but the positions of the cathode lead 107 and the anode lead 127 are not limited thereto. For example, the cathode lead 107 and the anode lead 127 may protrude from at least one of an upper side, a lower side, or both sides of the secondary battery, and may protrude in the same direction or in different directions. In this case, the cathode lead 107 and the anode lead 127 may be formed so as not to overlap each other in the planar direction.

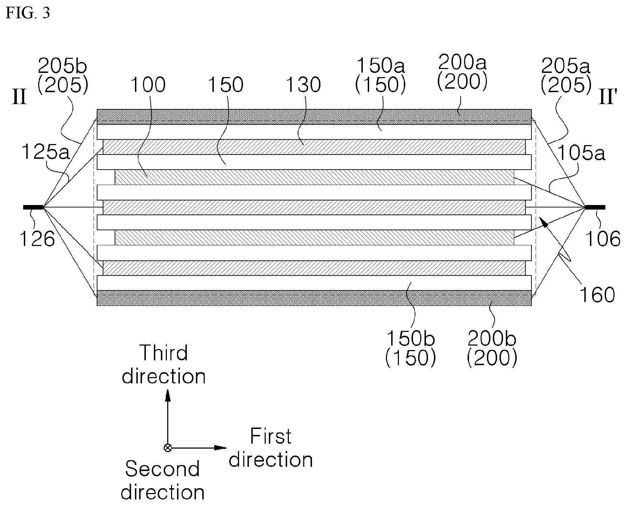

FIG. 3 is a cross-sectional view of a secondary battery taken along the line **II-II'** of FIG. 1 in the thickness direction. For convenience of description, the case is not illustrated in FIG. 3, and the active material layers 110 and 120 as well as the current collectors 105 and 125 are not shown in detail.

Referring to FIG. 3, the PTC heating sheet 200 may be disposed on the outermost surfaces of the electrode assembly 160. For example, the laminate of the electrode assembly 160 and the PTC heating sheet 200 disposed on the outermost surfaces of the electrode assembly 160 may be accommodated in the case.

According to exemplary embodiments, the cathode 100 may include the cathode current collector 105 including a cathode tab 105a, and the anode 130 may include the anode current collector 125 including an anode tab 125a.

The cathode tab 105a and the anode tab 125a may be connected to the electrode leads 107 and 127 to apply power to the secondary battery. The cathode tabs 105a may protrude from each cathode current collector 105, and a cathode tab merging part 106 may be formed in which a plurality of cathode tabs 105a are merged. For example, the plurality of cathode tabs 105a may be fused to form the cathode tab merging part 106. The anode tabs 125a may protrude from each anode current collector 125, and an anode tab merging part 126 may be formed in which a plurality of anode tabs 125a are merged. For example, the plurality of anode tabs 125a may be fused to form the anode tab merging part 126.

In exemplary embodiments, the PTC heating sheet 200 may include a heating tab 205 extending from the PTC heating sheet 200. The heating tab 205 may be electrically connected to the cathode tab merging part 106 or the anode tab merging part 126. The PTC heating sheet 200 may be electrically connected to electrode leads 107 and 127, which are connected to the cathode tab merging part 106 or the anode tab merging part 126, through the heating tab 205.

The heating tab 205 may include a first heating tab 205a electrically connected to the cathode tab merging part 106 together with the plurality of cathode tabs 105a. The heating tab 205 may include a second heating tab 205b electrically connected to the anode tab merging part 126 together with the plurality of anode tabs 125a. Accordingly, a portion of the power applied to the secondary battery may be supplied to the PTC heating sheet 200 connected to the electrode leads 107 and 127. As a result, the PTC heating sheet 200 may operate without a separate power supply, thereby heating the secondary battery with relatively low energy.

The PTC heating sheet 200 may include a positive temperature coefficient (PTC) material having a property of a resistance value that rapidly increases as the temperature rises. For example, the PTC heating sheet 200 may be provided as a heating device that heats the electrode assembly within a predetermined temperature range.

For example, there may be concerns that stability and capacity properties may be degraded due to lithium plating during charging/discharging of a secondary battery at low temperatures. The secondary battery according to exemplary embodiments of the present disclosure may have improved stability, capacity properties, and output properties at low temperatures by including the PTC heating sheet 200.

In exemplary embodiments, the PTC heating sheet 200 may include a first PTC heating sheet 200a disposed on the uppermost surface of the electrode assembly 160 and a second PTC heating sheet 200b disposed on the lowermost surface of the electrode assembly 160. Accordingly, the uppermost and lowermost surfaces of the electrode assembly 160 may be heated respectively, thereby providing more stable heating properties at low temperatures.

For example, when the electrode assembly 160 further includes the separator 150 disposed between the cathode 100 and the anode 130, the outermost surface of the electrode assembly 160 may be formed by the separator 150. The PTC heating sheet 200 may be disposed on an upper outermost separator 150a of the electrode assembly 160 or a lower outermost separator 150b of the electrode assembly 160.

For example, the PTC heating sheet 200 may be disposed on both the upper outermost separator 150a of the electrode assembly 160 and the lower outermost separator 150b of the electrode assembly. Accordingly, the heating properties of the secondary battery may be more uniformly improved.

In some embodiments, the PTC heating sheets 200 may contact an upper surface of the upper outermost separator 150a of the electrode assembly 160 and a lower surface of the lower outermost separator 150b of the electrode assembly 160. Accordingly, the electrode assembly 160 may be easily heated by the PTC heating sheet 200.

For example, adhesive layers may be formed between the PTC heating sheet 200 and the outermost separators 150a and 150b. For example, the PTC heating sheet 200 may contact the outermost separators 150a and 150b through the adhesive layers. For example, the adhesive layer may include at least one selected from the group consisting of an acrylic resin, a urethane resin, an epoxy resin, an olefin resin, and a silicone resin. These may be included alone or in combination of two or more. Accordingly, the PTC heating sheet 200 may be stably disposed on the outermost separators 150a and 150b.

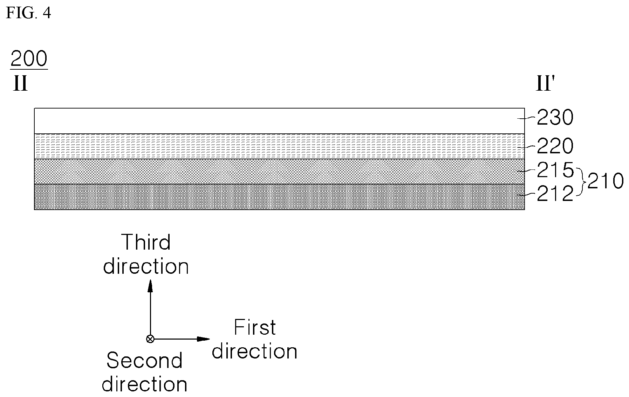

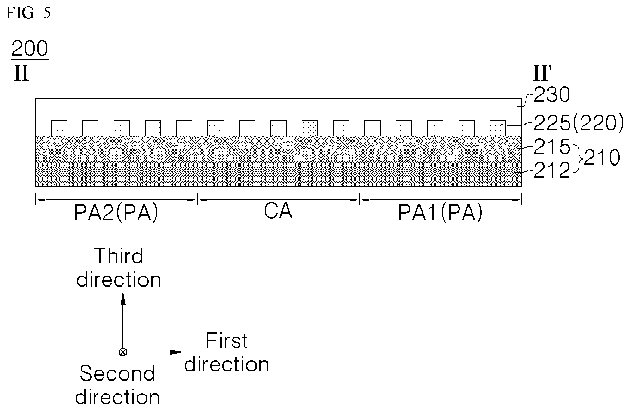

FIGS. 4 and 5 are schematic cross-sectional views illustrating the PTC heating sheet according to exemplary embodiments.

Referring to FIG. 4, the PTC heating sheet 200 may include a substrate 210 and a PTC element layer 220 formed on the substrate 210.

In some embodiments, the substrate 210 may include a polymer-based printed circuit board (PCB) including a core layer 212 containing an insulating material and a circuit layer 215.

For example, the core layer 212 may include a flexible resin such as polyimide resin, modified polyimide (MPI), epoxy resin, polyester, cycloolefin polymer (COP), liquid crystal polymer (LCP), or the like. The core layer 212 may include an internal insulating layer included in the substrate 210.

The circuit layer 215 may be disposed on the core layer 212. For example, the circuit layer 215 may include a metal such as silver (Ag), gold (Au), copper (Cu), aluminum (Al), platinum (Pt), palladium (Pd), chromium (Cr), titanium (Ti), tungsten (W), niobium (Nb), tantalum (Ta), vanadium (V), iron (Fe), manganese (Mn), cobalt (Co), nickel (Ni), zinc (Zn), tin (Sn), molybdenum (Mo), calcium (Ca), or an alloy containing at least one of them. These may be used alone or in combination of two or more. For example, the circuit layer 215 may include copper or a copper alloy.

For example, the circuit layer 215 may include circuit wiring. The circuit layer 215 may be electrically connected to the PTC element layer 220 through the circuit wiring to supply current to the PTC element layer 220.

The PTC element layer 220 may include a PTC material.

According to some embodiments, the PTC material may have a form in which conductive particles are dispersed in a polymer resin.

In some embodiments, the polymer resin may include a thermoplastic resin having low electrical conductivity. For example, the thermoplastic resin may include polyethylene, an ethylene copolymer, an ethylene-acrylate copolymer, polypropylene, polyvinyl chloride, polyvinyl acetate, polyvinyl acetal, an acrylic resin, or polystyrene. These may be included alone or in combination of two or more. For example, the conductive particles may include graphite, carbon black, a conductive metal oxide, a conductive polymer, or the like.

In some embodiments, the PTC material may include a ceramic material. For example, the PTC material may include a BaTiO₃-based ceramic material. The BaTiO₃-based ceramic material may include BaTiO₃, Bal-xSrxTiO₃, BaTi₁₋ₓZrₓO₃, La or Y-doped BaTiO₃, or Mn-doped BaTiO₃. These may be included alone or in combination of two or more.

In one embodiment, the PTC element layer 220 may include the above-described polymer resin and the ceramic material dispersed within the polymer resin.

The PTC heating sheet 200 according to exemplary embodiments may operate within a predetermined temperature range. For example, the PTC heating sheet 200 may heat the electrode assembly 160 in the temperature range of -50°C to 30°C, or -30°C to 20°C. If the temperature of the PTC heating sheet 200 exceeds the above range, the resistance of the PTC heating sheet 200 may rapidly increase, thereby interrupting the operation. The temperature range at which the resistance of the PTC heating sheet 200 rapidly increases may vary depending on the type of the PTC material.

In some embodiments, the PTC heating sheet 200 may operate at a temperature of 30°C or less, 20°C or less, 10°C or less, or 0°C or less. In some embodiments, the PTC heating sheet 200 may operate at a temperature range of -50°C or more, -30°C or more, or -20°C or more. When the temperature of the PTC heating sheet 200 exceeds the above range, the resistance of the PTC material may rapidly increase.

The PTC heating sheet 200 may further include a protective layer 230 disposed on the PTC element layer 220.

In one embodiment, the protective layer 230 may include an insulating layer containing a resin material. According to an embodiment, the protective layer 230 may be provided as a laminate sheet including a resin layer and a metal layer. For example, the laminate sheet may have a stacked structure including an inner resin layer, a metal layer, and an outer resin layer. The outer resin layer may include a polyethylene terephthalate (PET) resin or a nylon resin. The metal layer may include aluminum (Al). The inner resin layer may include polypropylene (PP).

Referring to FIG. 5, the PTC element layer 220 may include a plurality of PTC elements 225. For example, the plurality of PTC elements 225 may be arranged with a space between them on the substrate 210.

The PTC element 225 may include the above-described PTC material, and may be printed on the substrate 210 to be connected to the circuit wirings of the circuit layer.

For example, the PTC element layer 220 may be formed by coating the PTC material. The method of coating the PTC material is not particularly limited as long as it is a method commonly used in the art; for example, the PTC material may be applied (coated) to the substrate 210 by spray coating, dipping, or the like. The PTC element 225 may be formed by patterning the PTC element layer 220 into a predetermined shape.

For example, the PTC element 225 may be provided in a chip form. A plurality of PTC elements 225 in a chip form may be mounted on the substrate 210 by printing, so as to be electrically connected to the circuit wirings.

The PTC heating sheet 200 may include a central portion CA and a peripheral portion PA. For example, the central portion CA of the PTC heating sheet 200 may correspond to the central portion of the electrode assembly 160, and the peripheral portion PA of the PTC heating sheet 200 may correspond to the peripheral portion of the electrode assembly 160. The peripheral portion PA of the PTC heating sheet 200 may include a first peripheral portion PA1 and a second peripheral portion PA2, which are formed symmetrically with respect to the central portion CA.

For example, the first peripheral portion PA1, the central portion CA, and the second peripheral portion PA2 may each be an area corresponding to one-third of the length in the first direction among the areas of the surface of the substrate 210 on which the PTC elements 225 are distributed.

For example, the plurality of PTC elements 225 may be spaced apart and arranged throughout the central portion CA and the peripheral portion PA.

In one embodiment, the protective layer 230 may be arranged to cover the PTC element 225 in the planar direction. For example, the protective layer 230 may be formed to entirely cover the PTC element 225 in a planar direction. Accordingly, damage to the PTC element 225 may be prevented, and side reactions between the PTC element 225 and the electrolyte may be prevented or suppressed.

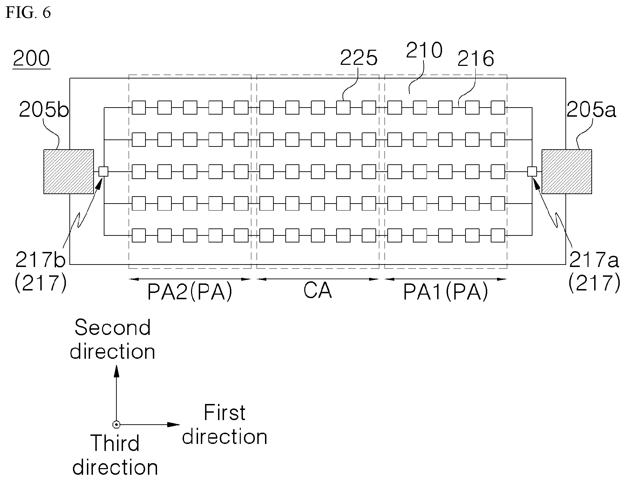

FIGS. 6 to 8 are schematic plan views illustrating the PTC heating sheet according to exemplary embodiments.

Referring to FIG. 6, the plurality of PTC elements 225 may be arranged at predetermined intervals, spaced apart from each other on the substrate 210.

The plurality of PTC elements 225 may be arranged periodically on the substrate 210. For example, the plurality of PTC elements 225 may be arranged in a row direction (the first direction) and a column direction (the second direction). For example, the plurality of PTC elements 225 may be arranged in the row direction to define PTC element rows, and the plurality of PTC elements 225 may be arranged in the column direction to define PTC element columns. A plurality of the PTC element rows may be arranged in the column direction, and a plurality of the PTC element columns may be arranged in the row direction.

The separation distance between two adjacent PTC elements 225 among the plurality of PTC elements 225 may be generally the same or different.

Each of the plurality of PTC elements 225 may have a circular or polygonal shape. The shape of each of the plurality of PTC elements 225 provided herein may be either the same or different.

The peripheral portion PA of the PTC heating sheet 200 may represent an area adjacent to the cathode tab 105a or the anode tab 125a, and the central portion CA of the PTC heating sheet 200 may represent an area located between the peripheral portions PA facing each other.

For example, the PTC elements 225 may be provided in the central portion CA and the peripheral portion PA of the PTC heating sheet 200 with a uniform distribution density.

As used herein, the term "distribution density" may refer to the number of PTC elements 225 included per unit area of the PTC heating sheet 200, or the sum of the areas of the plurality of PTC elements 225 included per unit area of the PTC heating sheet 200.

For example, as illustrated in FIG. 6, the number of PTC elements 225 per unit area provided in each of the central portion CA and the peripheral portion PA may be the same.

The plurality of PTC elements 225 may be electrically connected to each other by circuit wirings 216 included in the substrate 210. For example, the plurality of PTC elements 225 may be connected as a whole by the circuit wirings 216.

The heating tab 205 may be electrically connected to one end of the PTC heating sheet 200 adjacent to the peripheral portion PA. For example, the heating tab 205 may be electrically connected to the plurality of PTC elements 225 through the circuit wiring 216. Accordingly, current may be supplied to the plurality of PTC elements.

For example, the first heating tab 205a may be electrically connected to one end of the PTC heating sheet 200 adjacent to the first peripheral portion PA1, and the second heating tab 205b may be electrically connected to the other end of the PTC heating sheet 200 adjacent to the second peripheral portion PA2.

According to some embodiments, the PTC heating sheet 200 may further include a switch 217 disposed on the substrate 210. The switch 217 may turn on/off the current applied from the heating tab 205 electrically connected to the electrode leads 107 and 127 to operate the PTC heating sheet 200 within a predetermined temperature range.

According to some embodiments, the switch 217 may include a transistor such as a MOSFET or a relay.

When the temperature of the PTC heating sheet 200 reaches about 30°C or higher, about 20°C or higher, about 10°C or higher, or about 0°C or higher, the switch 217 may cut off the current applied to the PTC heating sheet 200 to stop the operation of the PTC heating sheet 200. For example, when the resistance of the PTC heating sheet 200 increases rapidly and the amount of applied current decreases below a predetermined value, the current may be cut off by the switch 217.

According to some embodiments, the switch 217 may be disposed on the substrate 210 and may be electrically connected to the heating tab 205 and the PTC element 225. The position of the switch 217 on the substrate 210 is not particularly limited, but may be, for example, disposed between the heating tab 205 and the PTC element 225 that is closest to the heating tab 205. For example, the switch 217 may include a first switch 217a adjacent to the first heating tab 205a and a second switch 217b adjacent to the second heating tab 205b.

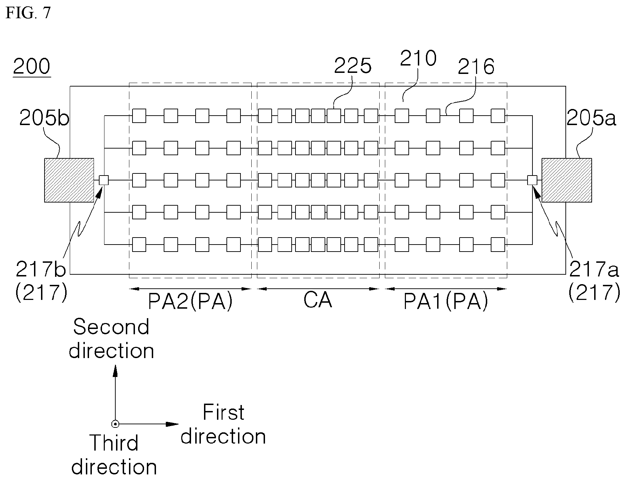

Referring to FIG. 7, the distribution density of the PTC elements 225 in the central portion CA of the PTC heating sheet 200 may be greater than the distribution density of the PTC elements 225 in the peripheral portion PA of the PTC heating sheet 200.

The peripheral portion PA may be closer to the cathode tab 105a or the anode tab 125a rather than the central portion CA. For example, the first peripheral portion PA1 may be adjacent to the cathode tab 105a, and the second peripheral portion PA2 may be adjacent to the anode tab 125a.

For example, it may be configured such that, during charging/discharging of the secondary battery, the current density near the electrode tabs 105a and 125a may be higher than the current density in the central portion of the electrode assembly 160. Accordingly, the temperature change or heating in the peripheral portion of the electrode assembly 160 may be greater than the temperature change or heating in the central portion of the electrode assembly 160.

The secondary battery according to some embodiments may have overall uniform heating properties by including a PTC heating sheet in which the distribution density of the PTC elements 225 in the central portion CA is adjusted to be greater than the distribution density of the PTC elements 225 in the peripheral portion PA. Accordingly, the capacity properties and output properties at low temperatures of the secondary battery may be further improved.

In some embodiments, the ratio of the distribution density of the PTC elements 225 in the peripheral portion PA to the distribution density of the PTC elements 225 in the central portion CA may be 0.7 to 0.95.

In one embodiment, the ratio of the distribution density of the PTC elements 225 in the peripheral portion PA to the distribution density of the PTC elements 225 in the central portion CA may be 0.7 or more, 0.75 or more, 0.77 or more, or 0.8 or more. For example, the ratio of the distribution density in the peripheral portion PA to the distribution density in the central portion CA of the PTC element 225 may be 0.95 or less, 0.92 or less, or 0.9 or less. For example, a ratio of the distribution density in the peripheral portion PA to the distribution density in the central portion CA of the PTC element 225 may be 0.7 to 0.95, or 0.8 to 0.9. Within the above range, the difference in temperature of the electrode assembly 160 or the secondary battery in the central portion and the peripheral portion during charging/discharging of the secondary battery may be further reduced.

In some embodiments, the power density of the PTC heating sheet 200 during charging/discharging of the secondary battery may be 0.02 W/cm² to 1.2 W/cm². Within the above range, the stability and output properties of the secondary battery at low temperatures may be further improved.

In some embodiments, the power density of the central portion CA during charging/discharging of the secondary battery may be 0.04 W/cm² to 1.0 W/cm² or 0.05 W/cm² to 0.5 W/cm². In some embodiments, the power density of the peripheral portion PA during charging/discharging may be 0.03 W/cm² to 0.9 W/cm² or 0.04 W/cm² to 0.45 W/cm².

In some embodiments, the ratio of the power density of the peripheral portion PA to the power density of the central portion CA may be 0.7 to 0.95. Within the above range, the overall uniform heating of the electrode assembly 160 may uniformly improve the output properties according to the position of the secondary battery.

In some embodiments, when a secondary battery including the PTC heating sheet 200 is operated for 100 seconds, the PTC heating sheet 200 may be heated. For example, the temperature difference of the PTC heating sheet 200 before and after operation may be 5°C to 60°C. In one embodiment, during charging/discharging of the secondary battery, the temperature difference of the central portion CA before and after operation may be 10°C to 60°C, or 10°C to 50°C. In one embodiment, the temperature difference of the peripheral portion PA may be 5°C to 55°C, or 5°C to 45°C.

In some embodiments, during charging/discharging of the secondary battery, the difference in the temperature change of the central portion CA with respect to the temperature change of the peripheral portion PA of the PTC heating sheet 200 may be 0°C to 5°C, 0.001°C to 0.1°C, or 0.01°C to 0.5°C. For example, when the secondary battery is discharged for 100 seconds under constant current conditions at an ambient temperature of -10°C and a 1 C-rate, the difference in the temperature change of the central portion CA with respect to the temperature change of the peripheral portion PA of the PTC heating sheet 200 may be 0.5°C or less. Within the above range, the heating temperature of the electrode assembly 160 may be uniformly provided across all positions.

For example, when the secondary battery including the PTC heating sheet 200 is operated for 100 seconds, the difference in temperature of the central portion relative to the temperature of the peripheral portion of the electrode assembly 160 may be less than 1.0°C, or less than 0.5°C. Within the above range, the temperature difference according to the position of the electrode assembly 160 or the secondary battery before and after charging/discharging of the secondary battery may be reduced, thereby providing overall uniform output properties.

In some embodiments, the distribution density of the PTC elements 225 may gradually increase in the direction from the peripheral portion PA of the PTC heating sheet 200 toward the central portion CA of the PTC heating sheet 200. For example, as the distance from one end of the PTC heating sheet 200 adjacent to the first peripheral portion PA1 increases, the distribution density of the PTC elements 225 within the first peripheral portion PA1 may gradually increase.

The distribution density of the PTC elements 225 in the first peripheral portion PA1 and the second peripheral portion PA2 may be the same or different from each other. For example, the distribution density of the PTC elements 225 in the first peripheral portion PA1 and the second peripheral portion PA2 may be the same. Accordingly, heating in the peripheral portions of the electrode assembly 160 adjacent to each of the cathode tab 105a and the anode tab 125a may be uniformly provided.

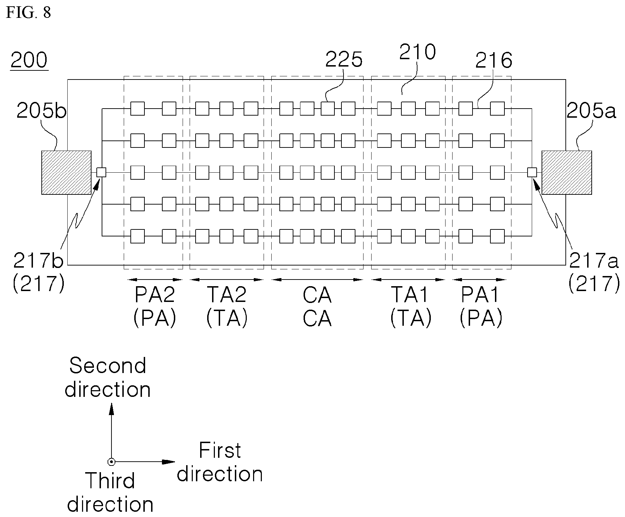

Referring to FIG. 8, the PTC heating sheet 200 may include a transition portion TA between the peripheral portion PA and the central portion CA.

The distribution density of the PTC elements 225 in the transition portion TA may be greater than that in the peripheral portion PA and less than that in the central portion CA.

For example, the distribution density of the PTC elements 225 in the peripheral portion PA, the transition portion TA, and the central portion CA may increase sequentially. For example, the distribution density of the PTC elements in the peripheral portion PA, the transition portion TA, and the central portion CA may increase sequentially and stepwise.

For example, the ratio of the distribution density of the PTC elements 225 in the peripheral portion PA to that of the central portion CA may be 0.5 to 0.75, or 0.6 to 0.7, and the ratio of the distribution density of the PTC elements 225 in the transition portion TA to that of the central portion CA may be 0.7 to 0.95, or 0.75 to 0.9.

For example, the transition portion TA of the PTC heating sheet 200 may include a first transition portion TA1 and a second transition portion TA2, which are formed symmetrically with respect to the central portion CA.

For example, the first peripheral portion PA1, the first transition portion TA1, the central portion CA, the second transition portion TA2, and the second peripheral portion PA2 may each be an area corresponding to one-fifth of the length in the first direction among the areas of the surface of the substrate 210 on which the PTC elements 225 are distributed.

The distribution density of the PTC elements 225 in the first transition portion TA1 and the second transition portion TA2 may be the same or different from each other. For example, the distribution density of the PTC elements 225 in the first transition portion TA1 and the second transition portion TA2 may be the same as each other.

Hereinafter, embodiments of the present invention will be further described with reference to specific experimental examples. However, the following examples and comparative example included in the experimental examples are only given for illustrating the present invention and those skilled in the art will obviously understand that various alterations and modifications are possible within the scope and spirit of the present invention. Such alterations and modifications are duly included in the appended claims.

### Example 1

### (1) Preparation of electrode assembly

LiNi_{0.8}Co_{0.1}Mn_{0.1}O₂ as a cathode active material, carbon black as a conductive material, and polyvinylidene fluoride (PVDF) as a binder were mixed in a mass ratio of 95:3:2 to prepare a cathode slurry. The cathode slurry was then applied to an aluminum substrate, dried and pressed to prepare a cathode.

92 wt% of artificial graphite as an anode active material, 2 wt% of styrene-butadiene rubber (SBR)-based binder, 1 wt% of CMC as a thickener, and 5 wt% of amorphous artificial graphite as a conductive material were used to prepare an anode slurry. The anode slurry was then applied to a copper substrate, dried and pressed to prepare an anode.

The prepared cathodes and anodes were arranged with polyethylene (PE) separators (15 µm) interposed therebetween to form electrode cells, and the electrode cells were wound to form an electrode assembly.

### (2) Preparation of PTC heating sheet

PTC elements including BaTiO₃ as a PTC material were arranged at a predetermined interval on a PCB substrate and connected to the circuit wirings on the substrate to prepare a PTC heating sheet as shown in FIG. 8. The distribution density of the PTC elements on the substrate was adjusted to sequentially and stepwise increase from the peripheral portion to the transition portion and to the central portion. The heating temperature according to the distribution density was adjusted as shown in Table 1 below.

### (3) Manufacture of secondary battery

The prepared PTC heating sheets were respectively placed on the uppermost surface and the lowermost surface of the prepared electrode assembly. A pouch (sealant layer: PP film 80 µm, metal layer: aluminum thin film 40 µm, covering layer: nylon film 15 µm) was prepared, and the laminate of the electrode assembly and the PTC heating sheet was accommodated in the pouch and then sealed. Thereafter, an electrolyte was injected and sealed to manufacture a secondary battery. The electrolyte used herein was prepared by dissolving a 1 M LiPF₆ solution in a mixed solvent of EC/EMC/DEC (25/45/30; volume ratio), and further adding 0.5 wt% of 1,3-propane sultone (PS).

### Example 2

A secondary battery was manufactured in the same manner as in Example 1, except that the distribution density of the PTC elements on the substrate was adjusted to be the same in the peripheral portion, the transition portion, and the central portion when preparing the PTC heating sheet, and that the PTC heating sheet was prepared as in FIG. 6.

### Comparative Example

A secondary battery was manufactured in the same manner as in Example 2, except that the PTC heating sheets were attached to the upper and lower peripheral portions of the pouch.

The heating temperatures of the upper and lower PTC heating sheets included in the secondary batteries according to the examples and the comparative example in the peripheral portion PA, the transition portion TA, and the central portion CA were adjusted as shown in Table 1 below.

**[TABLE 1]**

| | Peripheral portion PA | Transition portion TA | Central portion CA |
|---|---|---|---|
| Example 1 | 8°C | 10°C | 12°C |
| Example 2 | 10°C | 10°C | 10°C |
| Comparative Example | 10°C | 10°C | 10°C |

### Experimental Example: Evaluation of heating properties

The secondary batteries according to the examples and the comparative example were discharged under constant current conditions of 1 C-rate for 100 seconds, and the temperature changes in the peripheral portion PA, the transition portion TA, and the central portion CA of the PTC heating sheet, as well as the temperature changes in the peripheral portion and the central portion of the electrode assembly, were measured to evaluate the heating properties of the secondary batteries. The external temperature (ambient temperature) was maintained at -10°C.

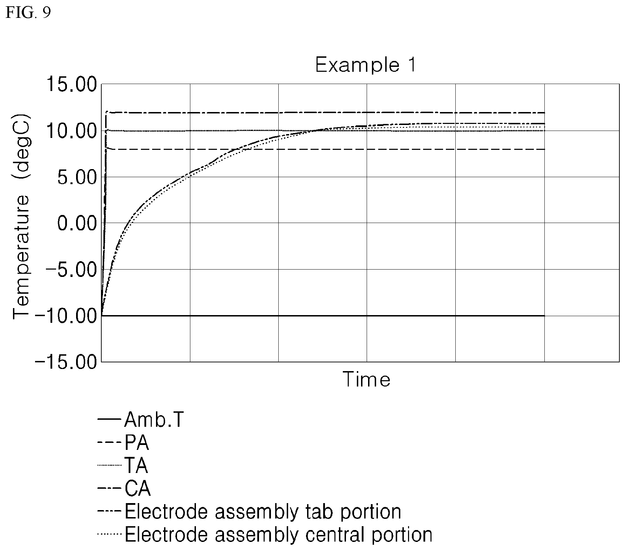

The results are shown in FIGS. 9 to 11.

FIGS. 9 to 11 are graphs illustrating the temperature change of each portion of the electrode assembly when the secondary battery according to each of Examples 1 and 2, and the Comparative Example was discharged for 100 seconds.

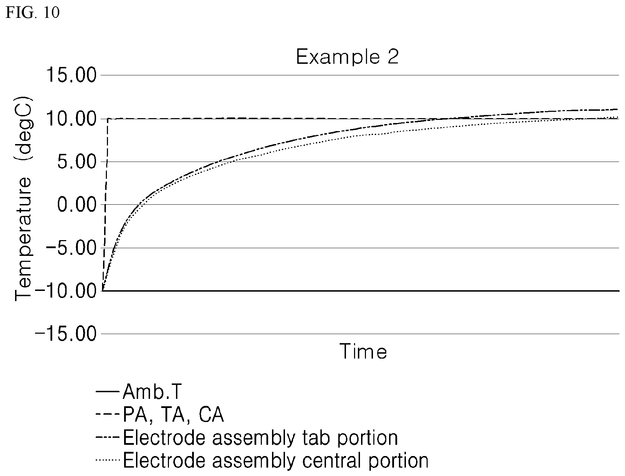

Referring to FIGS. 9 and 10, the temperature of the electrode assembly after operation of the secondary battery according to the examples converged to about 10°C.

In the case of Example 1, where the distribution density of the PTC elements was adjusted to sequentially and stepwise increase from the peripheral portion to the transition portion and to the central portion, the difference in the temperature change value of the central portion and peripheral portion of the electrode assembly was about 0.3°C.

In the case of Example 2, where the distribution density of the PTC elements was adjusted to be the same in the peripheral portion, the transition portion, and the central portion, the difference in the temperature change values of the central portion and the peripheral portion of the electrode assembly was about 0.8°C, which was greater compared to Example 1.

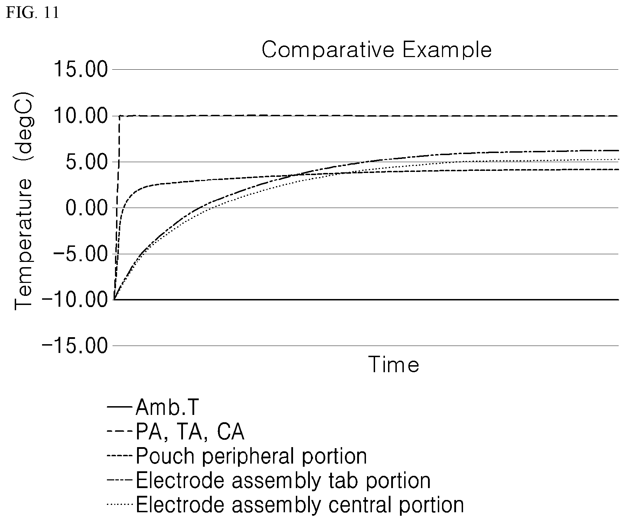

Referring to FIG. 11, the temperature of the electrode assembly after operation of the secondary battery according to the comparative example converged to about 5°C to 6°C. Therefore, in the case of the secondary battery according to the comparative example, in which the PTC heating sheet was arranged on the upper and lower peripheral portions of the pouch, the heating efficiency provided by the PTC heating sheet was reduced compared to the examples.

In addition, the difference in the temperature change values of the central portion and the peripheral portion of the electrode assembly according to the comparative example was about 1°C or more. Therefore, the secondary battery according to the comparative example was heated at a lower temperature and more unevenly overall compared to the examples.

The invention relates also to the following numbered aspects:
Aspect 1. A secondary battery comprising:
   an electrode assembly 160 which comprises cathodes 100 and anodes 130 repeatedly stacked;
   a case 170 configured to accommodate the electrode assembly 160 ; and
   a positive temperature coefficient (PTC) heating sheet 200 disposed between the case 170 and the outermost surface of the electrode assembly 160 .
Aspect 2. The secondary battery according to aspect 1 or 2, wherein the cathode 100 comprises a cathode current collector 105 including cathode tabs 105a, and the anode 130 comprises an anode current collector 125 including anode tabs 125a,
   wherein the electrode assembly 160 comprises a cathode tab merging part 106 in which the cathode tabs 105a are merged, and an anode tab merging part 126 in which the anode tabs 125a are merged.
Aspect 3. The secondary battery according to aspect 2, wherein the PTC heating sheet 200 comprises a heating tab 205 electrically connected to the cathode tab merging part 106 or the anode tab merging part 126.
Aspect 4. The secondary battery according to aspect 3, wherein the heating tab 205 comprises a first heating tab 205a connected to the cathode tab merging part 106, and a second heating tab 205b connected to the anode tab merging part 126.
Aspect 5. The secondary battery according to any one of aspects 1 to 4, wherein the electrode assembly 160 further comprises a separator 150 disposed between the cathode 100 and the anode 130, and
   the outermost surface of the electrode assembly 160 is formed by the separator 150.
Aspect 6. The secondary battery according to any one of aspects 1 to 5, wherein the PTC heating sheet 200 comprises a substrate 210 and a PTC element layer 220 formed on the substrate 210 and including a PTC material.
Aspect 7. The secondary battery according to aspect 6, wherein the PTC element layer 220 comprises a plurality of PTC elements 225, and
   a distribution density of the PTC elements 225 in a central portion CA of the PTC heating sheet 200 is greater than a distribution density of the PTC elements 225 in a peripheral portion PA of the PTC heating sheet 200.
Aspect 8. The secondary battery according to aspect 7, wherein each of the cathode 100 and the anode 130 comprises a cathode tab 105 and an anode tab 125, and
   the peripheral portion PA of the PTC heating sheet 200 is closer to the cathode tab 105 or the anode tab 125 than the central portion CA of the PTC heating sheet 200.
Aspect 9. The secondary battery according to aspect 8, wherein the distribution density of the PTC elements 225 gradually increases in a direction from the peripheral portion PA of the PTC heating sheet 200 to the central portion CA of the PTC heating sheet 200.
Aspect 10. The secondary battery according to aspect 8 or 9, wherein the PTC heating sheet 200 comprises a transition portion TA between the peripheral portion PA and the central portion CA, and a distribution density of the PTC elements 225 in the transition portion TA is greater than in the peripheral portion PA and smaller than in the central portion CA.
Aspect 11. The secondary battery according to any one of aspects 7 to 10, wherein the substrate 210 includes a printed circuit board comprising a core layer 212 including an insulating material, and a circuit layer 215, and the PTC elements 225 are electrically connected to the circuit layer 215.
Aspect 12. The secondary battery according to aspect 11, wherein the PTC heating sheet 200 further comprises a switch 217 connected to the circuit layer 215 and configured to control the operation of the PTC elements 225.
Aspect 13. The secondary battery according to any one of aspects 6 to 12, wherein the PTC heating sheet further comprises a protective layer 230 formed on the substrate 210 and covering the PTC element layer 220.
Aspect 14. The secondary battery according to any one of aspects 1 to 13, wherein a ratio of an area of the PTC heating sheet 200 to an area of the outermost surface of the electrode assembly 160 is 70% or more.
Aspect 15. The secondary battery according to any one of aspects 1 to 14, wherein the PTC heating sheet comprises a first PTC heating sheet 200a arranged on an uppermost surface of the electrode assembly 160 and a second PTC heating sheet 200b arranged on a lowermost surface of the electrode assembly 160.

## Claims

1. A secondary battery comprising:
an electrode assembly 160 which comprises cathodes 100 and anodes 130 repeatedly stacked;
a case 170 configured to accommodate the electrode assembly 160 ; and
a positive temperature coefficient (PTC) heating sheet 200 disposed between the case 170 and the outermost surface of the electrode assembly 160 .

2. The secondary battery according to claim 1, wherein the cathode 100 comprises a cathode current collector 105 including cathode tabs 105a, and the anode 130 comprises an anode current collector 125 including anode tabs 125a,
wherein the electrode assembly 160 comprises a cathode tab merging part 106 in which the cathode tabs 105a are merged, and an anode tab merging part 126 in which the anode tabs 125a are merged.

3. The secondary battery according to claim 2, wherein the PTC heating sheet 200 comprises a heating tab 205 electrically connected to the cathode tab merging part 106 or the anode tab merging part 126.

4. The secondary battery according to claim 3, wherein the heating tab 205 comprises a first heating tab 205a connected to the cathode tab merging part 106, and a second heating tab 205b connected to the anode tab merging part 126.

5. The secondary battery according to any one of claims 1 to 4, wherein the electrode assembly 160 further comprises a separator 150 disposed between the cathode 100 and the anode 130, and
the outermost surface of the electrode assembly 160 is formed by the separator 150.

6. The secondary battery according to any one of claims 1 to 5, wherein the PTC heating sheet 200 comprises a substrate 210 and a PTC element layer 220 formed on the substrate 210 and including a PTC material.

7. The secondary battery according to claim 6, wherein the PTC element layer 220 comprises a plurality of PTC elements 225, and
a distribution density of the PTC elements 225 in a central portion CA of the PTC heating sheet 200 is greater than a distribution density of the PTC elements 225 in a peripheral portion PA of the PTC heating sheet 200.

8. The secondary battery according to claim 7, wherein each of the cathode 100 and the anode 130 comprises a cathode tab 105 and an anode tab 125, and
the peripheral portion PA of the PTC heating sheet 200 is closer to the cathode tab 105 or the anode tab 125 than the central portion CA of the PTC heating sheet 200.

9. The secondary battery according to claim 8, wherein the distribution density of the PTC elements 225 gradually increases in a direction from the peripheral portion PA of the PTC heating sheet 200 to the central portion CA of the PTC heating sheet 200.

10. The secondary battery according to claim 8 or 9, wherein the PTC heating sheet 200 comprises a transition portion TA between the peripheral portion PA and the central portion CA, and a distribution density of the PTC elements 225 in the transition portion TA is greater than in the peripheral portion PA and smaller than in the central portion CA.

11. The secondary battery according to any one of claims 7 to 10, wherein the substrate 210 includes a printed circuit board comprising a core layer 212 including an insulating material, and a circuit layer 215, and the PTC elements 225 are electrically connected to the circuit layer 215.

12. The secondary battery according to claim 11, wherein the PTC heating sheet 200 further comprises a switch 217 connected to the circuit layer 215 and configured to control the operation of the PTC elements 225.

13. The secondary battery according to any one of claims 6 to 12, wherein the PTC heating sheet further comprises a protective layer 230 formed on the substrate 210 and covering the PTC element layer 220.

14. The secondary battery according to any one of claims 1 to 13, wherein a ratio of an area of the PTC heating sheet 200 to an area of the outermost surface of the electrode assembly 160 is 70% or more.

15. The secondary battery according to any one of claims 1 to 14, wherein the PTC heating sheet comprises a first PTC heating sheet 200a arranged on an uppermost surface of the electrode assembly 160 and a second PTC heating sheet 200b arranged on a lowermost surface of the electrode assembly 160.
